# EUROPEAN PATENT APPLICATION

(11) **EP 4 645 247 A1**
(43) Date of publication of application: **05.11.2025**
(21) Application number: 24275050.3
(22) Date of filing: 02.05.2024
(51) Int. Cl.: G06V 10/143, G06V 10/25, G06V 10/58, G06V 10/74, G06V 10/762, G06V 10/764, G06V 20/10, G06V 20/56, G01N 21/31

(54) **CLASSIFYING AN OBJECT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of classifying an object from a real-world environment in which an entity operates. The computer-implemented method comprising: receiving a hyperspectral image of the real-world environment from a hyperspectral camera mounted to the entity; obtaining a hyperspectral signature for each pixel of the hyperspectral image; identifying a material associated with each pixel based on the hyperspectral signature; clustering the pixels of the hyperspectral image into sub-objects based on the identified materials; comparing the sub-objects to sub-objects of known objects; and identifying the object based on the comparison.

## Description

### FIELD OF THE INVENTION

The present invention relates to methods of classifying objects. Most specifically, the methods may be methods of classifying objects from a real-world environment in which an entity operates.

### BACKGROUND

When an entity operates in a real-world environment, the entity may be equipment with a camera to capture images of the real-world environment. Typically, to classify any objects in the images, the image is input to a convolutional neural network model trained to classify objects from images.

It is an object of the present disclosure to improve on the prior art.

### SUMMARY

Embodiments of the present invention are intended to address the above technical problems.

According to an aspect of the present invention, there is provided a computer-implemented method of classifying an object from a real-world environment in which an entity operates, the computer-implemented method comprising: receiving a hyperspectral image of the real-world environment from a hyperspectral camera mounted to the entity; obtaining a hyperspectral signature for each pixel of the hyperspectral image; identifying a material associated with each pixel based on the hyperspectral signature; clustering the pixels of the hyperspectral image into sub-objects based on the identified materials; comparing the sub-objects to sub-objects of known objects; and identifying the object based on the comparison. The method may also comprise outputting a signal indicating the classification.

Classifying objects in this way, using hyperspectral images, means that materials of regions, or features, in a real-world environment are taken into account rather than just their visual appearance. This is particularly advantageous in military scenarios where objects, e.g. tanks, may be painted with camouflage to disguise the object against a particular background. As a result, using object classification algorithms on RGB images may erroneously classify objects. Using the present method, errors are less common. In the example above, a material of a painted tank, e.g. paint, may be detected and so the object would not be classified erroneously as foliage, for example. The object classification may be classifying an object, e.g. a tank, and also identifying its position and orientation, e.g. pose.

In an embodiment, comparing the sub-objects to sub-objects of known objects comprises: identifying a primary sub-object from the clustered sub-objects; and identifying any remaining sub-objects from the clustered sub-objects as secondary sub-objects.

In an embodiment, identifying the primary sub-object from the clustered sub-objects comprises: calculating a size of each sub-object from the clustered sub-objects; and identifying the primary sub-object as the sub-object having the largest size.

In an embodiment, identifying the primary sub-object from the clustered sub-objects comprises: determining a prediction probability when identifying the respective material of the sub-object; and selecting the primary sub-object as the sub-object having the material with the highest prediction probability.

In an embodiment, identifying the primary sub-object from the clustered sub-objects comprises: identifying a frequency of occurrence of materials in the sub-objects of known objects; identifying one of the sub-objects having a material that corresponds to a lowest frequency of occurrence in the sub-objects of known materials; and selecting the identified sub-object having a material with the lowest frequency as the primary sub-object.

In an embodiment, comparing the sub-objects to sub-objects of known objects comprises: comparing the material of the primary sub-object with materials associated with sub-objects of the known objects; and disregarding any objects not having a sub-object with the same material as the primary sub-object.

In an embodiment, comparing the sub-objects to sub-objects of known objects comprises: obtaining, for each sub-object of the known objects, a feasible search zone, the feasible search zone including a material, a position, a shape, and a size; comparing the sub-objects to the respective search zones; and identifying an object having feasible search zones most closely matched by the respective sub-objects, wherein identifying the object based on the comparison comprises selecting the identified object as the object.

In an embodiment, identifying the object having feasible search zones most closely matched by the respective sub-objects comprises: determining a proportion of each feasible search zone that is occupied by a sub-object having the same material; and selecting the object having the most feasible search zones most occupied by a respective sub-object.

In an embodiment, selecting the object having the most feasible search zones most occupied by the respective sub-object comprises: determining, for each object, an average proportion of occupancy across feasible search zones; ranking the objects according to the average proportion of occupancy; and selecting the object with the highest rank.

In an embodiment, determining, for each object, the average proportion of occupancy across feasible search zones comprises: determining a prediction confidence for the material of each sub-object; and assigning a weight to each sub-object based on the prediction confidence, wherein determining, for each object, an average proportion of occupancy across feasible search zones comprises: determining a weighted average occupancy across feasible search zones using the assigned weight of each sub-object.

In an embodiment, assigning a weight to each sub-object based on the prediction confidence comprises: assigning a higher weight to sub-object having a material with higher prediction confidence than sub-objects having a material with lower prediction confidence.

In an embodiment, identifying a material associated with each pixel based on the hyperspectral signature comprises: inputting the hyperspectral signature into a machine learning model trained to classify a material from hyperspectral signatures; and obtaining a material as the output from the machine learning model.

In an embodiment, clustering the pixels of the hyperspectral image into sub-objects based on the assigned materials comprises: inputting the material of each pixel to a machine learning clustering model, wherein the machine learning clustering model is an unsupervised clustering model.

According to an aspect of the present disclosure, there is provided a computer-implemented method of operating an autonomous system of an entity, the computer-implemented method comprising: classifying an object using the computer-implemented method of any preceding aspect or embodiment; determining an operation plan for the autonomous system based on the classified object; and operating the autonomous system using operation plan. This method may also comprise determining a three-dimensional position of the object, constructing a three-dimensional point cloud using the three-dimensional position, labelling the point cloud using the object classification, and determining the trajectory based on the labelled point cloud.

According to an aspect of the present disclosure, there is provided a transitory, or non-transitory, computer-readable medium, having instructions stored thereon that when executed by at least one processor cause the at least one processor to perform the computer-implemented method of any preceding aspect or embodiment.

According to an aspect of the present disclosure, there is provided an entity, comprising: a hyperspectral camera mounted to the entity; an autonomous system; a processor; and storage having instructions stored thereon that when executed by the processor cause the processor to perform the computer implemented method of operating the autonomous system of a preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a schematic diagram of an entity operating in a real-world environment, according to at least one embodiment;
Figure 2 is an image or a hyperspectral image captured by a respective camera or hyperspectral camera of the entity of Figure 1;
Figure 3 is a hyperspectral signal associated with a pixel of the hyperspectral image of Figure 2;
Figure 4 is a semantic materials map obtained based on the hyperspectral signatures from Figure 3;
Figure 5 is a flow chart summarising a computer-implemented method of classifying an object in a real-world environment in which an entity operates, according to at least one embodiment; and
Figure 6 is a flow chart summarising a computer-implemented method of moving an autonomous system of an entity, according to at least one embodiment.

### DETAILED DESCRIPTION

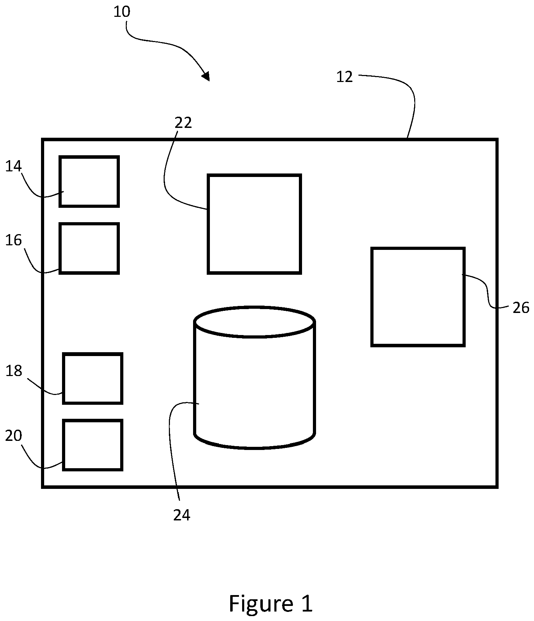

With reference to Figure 1, an entity 10 comprises a body 12, a first camera 14, a second camera 16, a first hyperspectral camera 18, a second hyperspectral camera 20, a processor 22, storage 24, and an autonomous system 26.

The entity may be a military vehicle. The military vehicle may be a tank or other armored vehicle, for example.

The first camera 14 and the second camera 16 are red, green, and blue, (RGB) cameras. A separation distance between the first and second cameras 14, 16, is known. The orientations of the first and second cameras 14, 16, is known. A separation distance between the first and second hyperspectral cameras 18, 20, is known. The orientations of the first and second hyperspectral cameras 18, 20, is known. The first and second cameras 14, 16, are each configured to capture an image, where the image is an RGB image or a grayscale image. In other words, the image is one of a three-channel image and a single channel image. The first and second hyperspectral cameras 16, 18,

The storage 24 may be non-transitory computer readable media. The storage 24 may have instructions stored thereon that when executed by the processor 22 cause the processor to perform any of the computer-implemented methods (which may be called methods herein) described herein.

The autonomous system 26 may be any system that may move autonomously based on the images or hyperspectral images. The autonomous system 26 may be an autonomous driving system when the entity is an autonomous vehicle. Alternatively, the autonomous system may be a robot arm or other robot system configured to move in the real-world environment.

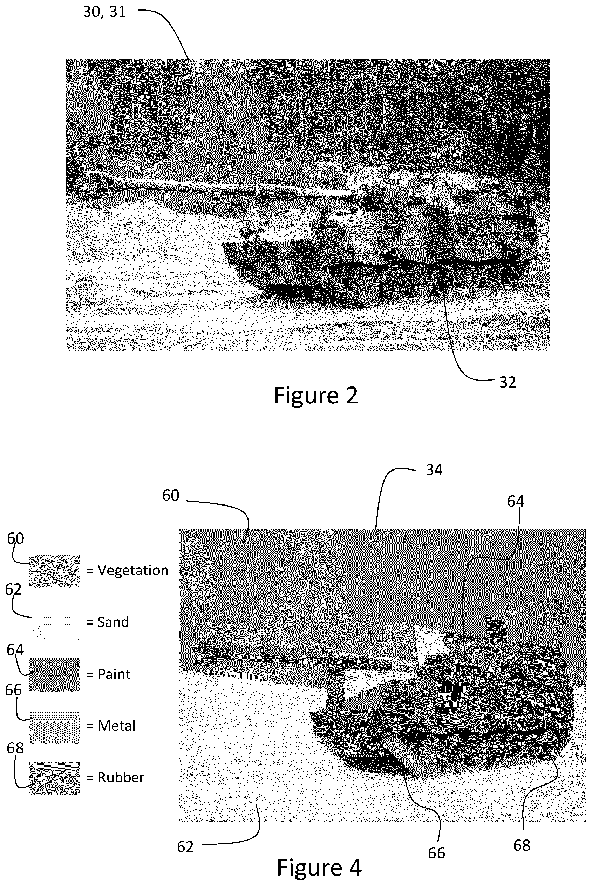

With reference to Figure 2, a computer-implemented method of classifying an object from a real-world environment in which the entity 10 operates comprises receiving a hyperspectral image 31 of the real-world environment from the hyperspectral camera 16, 18.

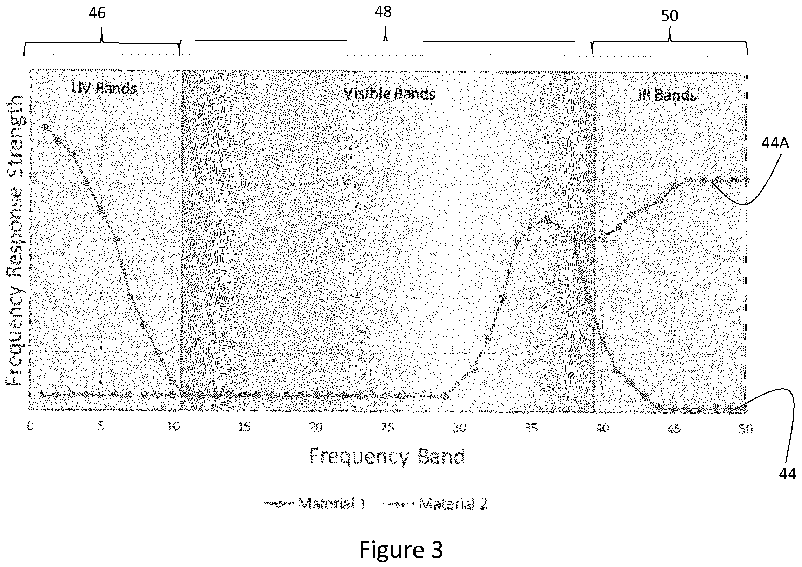

With reference to Figure 3, the method comprises obtaining a hyperspectral signature for each pixel of the hyperspectral image. Obtaining the hyperspectral signature may comprise, for each pixel of the hyperspectral image 31, constructing a hyperspectral curve, or hyperspectral signature, 44. Constructing the hyperspectral curve for each pixel of the hyperspectral image comprises dividing the light sensed by the pixel into a plurality of frequency bands. There may be 50 to 200 frequency bands. In the example in Figure 3, there are 50 frequency bands. The frequency bands may be grouped into three frequency ranges. The three frequency ranges include an ultraviolet, UV, range 46, a visible light range 48, and an infrared, IR, range 50.

The hyperspectral curve 44 represents an object which has an orange colour in the visible light range. Therefore, the intensity of the curve peaks between red and yellow frequencies. The hyperspectral curve is a further peak in the UV range 46. A further hyperspectral curve 44A represents an object which has the same orange colour as the object of the hyperspectral curve 44. However, the object of the further hyperspectral curve is made from a different material and so does not have a peak in the UV range 46 but has a peak in the IR range 50 instead. For example, the material of the object of the hyperspectral curve 44 may be a plastic material, for example. The material of the object of the further hyperspectral curve 44A may be a glass material, for example.

The method also comprises identifying a material associated with each pixel based on the hyperspectral signature. This may be achieved by inputting the hyperspectral signature into a machine learning model trained to classify a material from hyperspectral signatures, and obtaining a material as the output from the machine learning model. The machine learning model may be a neural network model. The neural network model may be trained using a set of hyperspectral signatures and labels of materials associated with each hyperspectral signature. The neural network model may be a convolutional neural network model. The machine learning model may be trained using backpropagation and an optimisation algorithm such as gradient descent.

With reference to Figure 4, identifying the materials associated with each pixels may include a step of constructing a semantic materials map. This may be achieved by assigning a label to each pixel based on its hyperspectral signature describing a material of the pixel.

For the hyperspectral image 31 of Figure 2, the material labels may include vegetation 60, sand, 62, paint 64, metal 66, rubber 68, etc. In the example where the object 32 is a tank, the vegetation 60 and sand 62 may form the background. The paint 64 may be provided on a body of the tank. The paint may provide a camouflaged effect to the body. The tracks may be identified as metallic 66, and the wheels within the tracks may be labelled as rubber 68.

The method also comprises clustering the pixels of the hyperspectral image into sub-objects based on the identified materials. A sub-object may be a part of the object. For example, a sub-object of the tank may include a body, wheels, tracks, a gun, etc. In another example object of a car, the sub-objects may include, a body, windows, wheel rims, tyres, bumpers, etc. The sub-objects may each have a different material. For example, for the tank, the body may be associated with a paint material, tracks may be metallic, wheels may be rubber, the gun may be paint also, etc. For the car, the body may be associated with paint, windows may be glass, wheel rims maybe metallic or plastic, bumpers may be plastic or paint, tyres may be rubber, etc.

Clustering the pixels of the hyperspectral image into sub-objects based on the assigned materials may comprise inputting the material of each pixel to a machine learning clustering model. In this way, clustering may cluster sub-objects into contiguous groups where groups of pixels include the same materials. The machine learning clustering model may be an unsupervised clustering model. The unsupervised clustering model may be a k-means cluster model, for example.

The method also comprises comparing the sub-objects to sub-objects of known objects.

This may include identifying a primary sub-object from the clustered sub-objects, and identifying any remaining sub-objects from the clustered sub-objects as secondary sub-objects. Identifying the primary sub-object from the clustered sub-objects may be achieved in different ways. For example, this may be achieved by calculating a size of each sub-object from the clustered sub-objects, and identifying the primary sub-object as the sub-object having the largest size. The largest size may by determined as the sub-object with the largest number of pixels.

In another example, this may be achieved by determining a prediction probability when identifying the respective material of the sub-object, and selecting the primary sub-object as the sub-object having the material with the highest prediction probability. The prediction probability may be obtained from the neural network model. For example, a final layer of the neural network model may include a probability distribution over multiple classes of materials. In other words a probability that the hyperspectral signature is associated with each material class is determined and the material classification with the highest probability may be deemed to be the material of the pixel. The highest probability is unlikely to be 1, when normalised between 0 and 1, where 0 is no possibility and 1 is 100% probable. A SoftMax layer may be used to achieve this probability distribution. The probability associated with the classification of each pixel may be averaged over the sub-object to provide the prediction probability for the sub-object.

In another example, this may be achieved by identifying a frequency of occurrence of materials in the sub-objects of known objects, identifying one of the sub-objects having a material that corresponds to a lowest frequency of occurrence in the sub-objects of known materials, and selecting the identified sub-object having a material with the lowest frequency as the primary sub-object. For example, there may be 100 sub-objects of known objects that are rubber, 50 sub-objects of known objects that are plastic, and only 2 that are quartz. Therefore, if one of the sub-objects is quartz, this is selected as the primary sub-object. As a result, the search space for identifying the corresponding known object will be much smaller than if rubber was selected. In order to identify quickly the frequency of occurrence of the materials of the sub-objects of known materials, an index may be maintained which lists each material and a number of sub-objects that a made from that material.

Once the primary and secondary sub-objects are known, the material of the primary sub-object is compared with materials associated with sub-objects of the known objects. Any objects not having a sub-object with the same material as the primary sub-object may be disregarded. In this way, only known objects which have a material in common with the sub-objects are used for the comparison. This makes searching much easier and quicker as it narrows down the search space.

Comparing the sub-objects to sub-objects of known objects may include obtaining a feasible search zone for each sub-object of a known object. The feasible search zone includes a position, a size, and shape and a material. The position, the size and the shape of the sub-object may change depending on a position and orientation of the object relative to the entity. Therefore, each known object may have a set of feasible search zones for each position and orientation. The material should be consistent throughout the different positions and orientations.

The sub-objects may be compared to the feasible search zones. For instance, the sub-objects of the object are compared to the feasible search zones of each known object, or at least the known objects where the primary sub-object material matches. Then, the object having feasible search zones most closely matched by the respective sub-objects is identified. This may be achieved by determining a proportion of each feasible search zone that is occupied by a sub-object having the same material. For example, the proportion may be 0% to 100%, or may be normalised between 0 for no occupancy and 1 for full occupancy. This may also be considered as a degree of overlap of the sub-object compared to the feasible search zone. Then, the object having the most feasible search zones most occupied by a respective sub-object is selected as the object. This selection naturally indicates not only the known object but also the orientation and position of the known object.

Selecting the object having the most feasible search zones most occupied by the respective sub-object comprises determining, for each object, an average proportion of occupancy across feasible search zones. This may be achieved in different ways. For example, the prediction confidence may be determined when identifying the material of the sub-object. A weight may be assigned to each sub-object based on the prediction confidence. For example, a higher weight may be assigned to a sub-object having a material with a higher prediction confidence than sub-objects having a material with lower prediction confidence.

Then, a weighted average occupancy can be determined across the feasible search zones using the assigned weight of each sub-object. For example, if the prediction confidence is 1, or 100%, and all feasible search zones are fully overlapped with the correct material, the weighted average is 1, or 100%. Where the prediction confidence is 1, or 100%, and there are three feasible search zones (FSZ) for the known object, a first FSZ having an overlap of 50%, a second FSZ having an overlap of 100%, and a third FSZ having an overlap of 75%, the weighted average may be 75%. However, if the material of the sub-object associated with the first and second FSZs have prediction confidences of 50%, and the material of the sub-object associated with the third FSZ has a prediction confidence of 75%, and the overlap of the first FSZ is 50%, and the overlap for the second and third FSZs is 75%, then the weighted average overlap, or occupancy, is about 40%.

In other words, to determine an overall degree of occupancy, or overlap, of a known object, an average occupancy, or overlap, is calculated over all the FSZs for the known object. This calculation may be enhanced by applying the weight to the overlap of each FSZ.

In addition to above, if the material of the sub-object is known not to be associated with the known object, the sub-object may be assigned a zero weight, or even a negative weight. In this way, the average, or weighted average, will be significantly reduced.

The method may then comprise ranking the objects according to the average proportion of occupancy, and selecting the object with the highest rank.

In this way, the method comprises identifying the object based on the comparison. Once the object has been identified, a signal may be sent indicating the identified object.

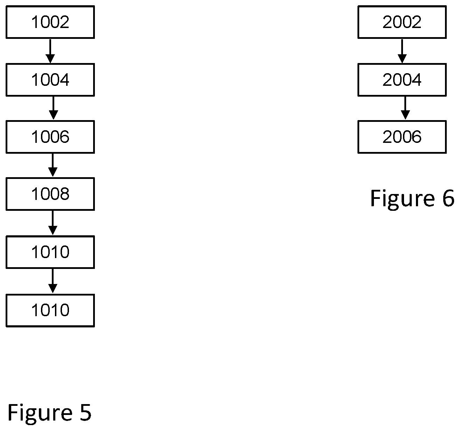

With reference to Figure 5, the computer-implemented method of classifying an object from a real-world environment in which an entity operates comprises: receiving 1002 a hyperspectral image of the real-world environment from a hyperspectral camera mounted to the entity; obtaining 1004 a hyperspectral signature for each pixel of the hyperspectral image; identifying 1006 a material associated with each pixel based on the hyperspectral signature; clustering 1008 the pixels of the hyperspectral image into sub-objects based on the identified materials; comparing 1010 the sub-objects to sub-objects of known objects; and identifying the object based on the comparison.

With reference to Figure 6, a computer-implemented method of operating an autonomous system of an entity may be summarized as comprising: classifying 2002 an object using the computer-implemented methods described above, determining 2004 an operation plan for the autonomous system based on the classified object, and operating 2006 the autonomous system using the operation plan. The method may also include steps such as determining a three-dimensional position of the identified object, constructing a three-dimensional point cloud using the identified object's position, and using the three-dimensional point cloud to determine the operation plan. In some embodiments, the autonomous system may be a driving system in which case the operation plan may be a trajectory. When the autonomous system is a system that does not move, e.g. an automated indication system, the operation plan may be a plan to operate the autonomous system e.g. to indicate a warning automatically.

## Claims

1. A computer-implemented method of classifying an object from a real-world environment in which an entity operates, the computer-implemented method comprising:
receiving a hyperspectral image of the real-world environment from a hyperspectral camera mounted to the entity;
obtaining a hyperspectral signature for each pixel of the hyperspectral image;
identifying a material associated with each pixel based on the hyperspectral signature;
clustering the pixels of the hyperspectral image into sub-objects based on the identified materials;
comparing the sub-objects to sub-objects of known objects; and
identifying the object based on the comparison.

2. The computer-implemented method of Claim 1, wherein comparing the sub-objects to sub-objects of known objects comprises:
identifying a primary sub-object from the clustered sub-objects; and
identifying any remaining sub-objects from the clustered sub-objects as secondary sub-objects.

3. The computer-implemented method of Claim 2, wherein identifying the primary sub-object from the clustered sub-objects comprises:
calculating a size of each sub-object from the clustered sub-objects; and
identifying the primary sub-object as the sub-object having the largest size.

4. The computer-implemented method of Claim 2, wherein identifying the primary sub-object from the clustered sub-objects comprises:
determining a prediction probability when identifying the respective material of the sub-object; and
selecting the primary sub-object as the sub-object having the material with the highest prediction probability.

5. The computer-implemented method of Claim 2, wherein identifying the primary sub-object from the clustered sub-objects comprises:
identifying a frequency of occurrence of materials in the sub-objects of known objects;
identifying one of the sub-objects having a material that corresponds to a lowest frequency of occurrence in the sub-objects of known materials; and
selecting the identified sub-object having a material with the lowest frequency as the primary sub-object.

6. The computer-implemented method of any of Claims 2 to 5, wherein comparing the sub-objects to sub-objects of known objects comprises:
comparing the material of the primary sub-object with materials associated with sub-objects of the known objects; and
disregarding any objects not having a sub-object with the same material as the primary sub-object.

7. The computer-implemented method of any preceding claim, wherein comparing the sub-objects to sub-objects of known objects comprises:
obtaining, for each sub-object of the known objects, a feasible search zone, the feasible search zone including a material, a position, a shape, and a size;
comparing the sub-objects to the respective search zones; and
identifying an object having feasible search zones most closely matched by the respective sub-objects,
wherein identifying the object based on the comparison comprises selecting the identified object as the object.

8. The computer-implemented method of Claim 7, wherein identifying the object having feasible search zones most closely matched by the respective sub-objects comprises:
determining a proportion of each feasible search zone that is occupied by a sub-object having the same material; and
selecting the object having the most feasible search zones most occupied by a respective sub-object.

9. The computer-implemented method of Claim 8, wherein selecting the object having the most feasible search zones most occupied by the respective sub-object comprises:
determining, for each object, an average proportion of occupancy across feasible search zones;
ranking the objects according to the average proportion of occupancy; and
selecting the object with the highest rank.

10. The computer-implemented method of any of Claims 7 to 9, wherein determining, for each object, the average proportion of occupancy across feasible search zones comprises:
determining a prediction confidence for the material of each sub-object; and
assigning a weight to each sub-object based on the prediction confidence,
wherein determining, for each object, an average proportion of occupancy across feasible search zones comprises:
determining a weighted average occupancy across feasible search zones using the assigned weight of each sub-object.

11. The computer-implemented method of Claim 10, wherein assigning a weight to each sub-object based on the prediction confidence comprises:
assigning a higher weight to sub-object having a material with higher prediction confidence than sub-objects having a material with lower prediction confidence.

12. The computer-implemented method of any preceding claim, wherein identifying a material associated with each pixel based on the hyperspectral signature comprises:
inputting the hyperspectral signature into a machine learning model trained to classify a material from hyperspectral signatures; and
obtaining a material as the output from the machine learning model.

13. The computer-implemented method of any preceding claim, wherein clustering the pixels of the hyperspectral image into sub-objects based on the assigned materials comprises:
inputting the material of each pixel to a machine learning clustering model, wherein the machine learning clustering model is an unsupervised clustering model.

14. A computer-implemented method of operating an autonomous system of an entity, the computer-implemented method comprising:
classifying an object using the computer-implemented method of any preceding claim;
determining an operation plan for the autonomous system based on the classified object; and
operating the autonomous system using the operation plan.

15. A transitory, or non-transitory, computer-readable medium, having instructions stored thereon that when executed by at least one processor cause the at least one processor to perform the computer-implemented method of any preceding claim.

16. An entity, comprising:
a hyperspectral camera mounted to the entity;
an autonomous system;
a processor; and
storage having instructions stored thereon that when executed by the processor cause the processor to perform the computer implemented method of operating the autonomous system of Claim 14.
